# EUROPÄISCHE PATENTANMELDUNG

(11) **EP 3 449 731 A1**
(43) Veröffentlichungstag der Anmeldung: **06.03.2019**
(21) Anmeldenummer: 17189274.8
(22) Anmeldetag: 04.09.2017
(51) Int. Cl.: A23B 4/28

(54) **NADELREGISTER**

(71) Anmelder: Schröder Maschinenbau GmbH & Co. KG, 33824 Werther (DE)
(72) Erfinder: Danwerth, Peter J., 33803 Steinhagen (DE)
(74) Vertreter: Ter Meer Steinmeister & Partner

(57) **Zusammenfassung**

Nadelregister für Injektionsvorrichtungen zur Injektion von Flüssigkeit in Lebensmittelprodukte, mit einem Nadelträger (10), der eine Verteilerkammer (16) für die Flüssigkeit bildet, mehreren parallelen, hohlen Nadeln (12), die so an dem Nadelträger (10) gehalten sind, dass ihre offenen oberen Enden in der Verteilerkammer (16) liegen, und mit mindestens einer Lochplatte (30), die entnehmbar in der in der Verteilerkammer (16) aufgenommen ist und in deren Löchern mehrere der Nadeln (12) gehalten sind, dadurch gekennzeichnet, dass die Nadeln (12) in die Löcher der Lochplatte (30) eingeschweißt sind.

## Beschreibung

Die Erfindung betrifft ein Nadelregister für Injektionsvorrichtungen zur Injektion von Flüssigkeit in Lebensmittelprodukte, mit einem Nadelträger, der eine Verteilerkammer für die Flüssigkeit bildet, mehreren parallelen, hohlen Nadeln, die so an dem Nadelträger gehalten sind, dass ihre offenen oberen Enden in der Verteilerkammer liegen, und mit mindestens einer Lochplatte, die entnehmbar in der Verteilerkammer aufgenommen ist und in deren Löchern mehrere der Nadeln gehalten sind.

Beispiele für Injektionsvorrichtungen, in denen solche Nadelregister verwendet werden, sind etwa Pökelvorrichtungen, mit denen Lake in Fleischprodukte injiziert wird.

Aus EP 2 545 782 A2 ist ein Nadelregister dieser Art bekannt, bei dem die oberen Enden der Nadeln jeweils mit einem Bund zwischen zwei übereinander liegenden Lochplatten gehalten sind. Dadurch wird ein einfaches Auswechseln der Nadeln ermöglicht.

Da die Flüssigkeiten, die in die Lebensmittelprodukte injiziert werden, mit den Innenflächen der Nadeln und der Verteilerkammer in Berührung kommen, ist eine regelmäßige und gründliche Reinigung des Nadelregisters unerlässlich.

Aufgabe der Erfindung ist es, ein reinigungsfreundliches Nadelregister zu schaffen.

Diese Aufgabe wird erfindungsgemäß dadurch gelöst, dass die Nadeln in die Löcher der Lochplatte fest eingesetzt sind.

Da die oberen Enden der Nadeln nicht mehr zwischen zwei Lochplatten eingespannt zu werden brauchen, wird das Einsetzen der Lochplatten und Nadeln in das Nadelregister sowie die Entnahme der Lochplatten mit den Nadeln wesentlich vereinfacht. Außerdem werden Fugen und Toträume reduziert, in denen sich Schmutz absetzen könnte.

Vorteilhafte Ausgestaltungen der Erfindung sind in den Unteransprüchen angegeben.

In einer Ausführungsform sind die Nadeln in die Löcher der Lochplatte eingeschweißt, beispielsweise durch Laserschweißen oder Reibschweißen.

Wenn die Nadeln fest in die Lochplatte eingeschweißt sind, lassen sie sich nicht mehr einzeln aus der Lochplatte lösen. Dadurch wird jedoch die Handhabung der Nadeln bei Reinigungsarbeiten nicht erschwert sondern im Gegenteil eher erleichtert.

In einer anderen Ausführungsform können die Nadeln im Presssitz in den Löchern der Lochplatte gehalten sein.

In einer vorteilhaften Ausführungsform ist die Verteilerkammer drehbar in einem Rahmen gelagert, so dass sie nach Entnahme der Lochplatten und der Nadeln in eine Stellung gedreht werden kann, in der die Unterseite der Verteilerkammer, an der die Nadeln austreten, nach oben oder schräg nach oben weist, so dass sie bei Reinigungsarbeiten besser erreichbar ist.

Diese Maßnahme ist auch unabhängig von den Merkmalen des Anspruchs 1 von Vorteil. Gegenstand der Erfindung ist deshalb auch ein Nadelregister für Injektionsvorrichtungen zur Injektion von Flüssigkeit in Lebensmittelprodukte, mit einem Nadelträger, der eine Verteilerkammer für die Flüssigkeit bildet, mehreren parallelen, hohlen Nadeln, die so an dem Nadelträger gehalten sind, dass ihre offenen Enden in der Verteilerkammer liegen, und mit mindestens einer Lochplatte, die entnehmbar in der Verteilerkammer aufgenommen ist und in deren Löchern mehrere der Nadeln gehalten sind, dadurch gekennzeichnet, dass die Verteilerkammer in einem Rahmen gehalten und relativ zu dem Rahmen um eine parallel zum Boden der Verteilerkammer verlaufende Achse drehbar ist.

Im folgenden wird ein Ausführungsbeispiel anhand der Zeichnung näher erläutert.

Es zeigen:
- Fig. 1: einen Teilschnitt durch ein erfindungsgemäßes Nadelregister;
- Fig. 2: eine einzelne Lochplatte mit eingeschweißten Nadeln in der Draufsicht;
- Fig. 3: einen Teilschnitt durch die Lochplatte und einige der Nadeln;
- Fig. 4: das komplette Nadelregister nach Fig. 1 mit geöffneter Verteilerkammer in einer Ansicht von oben;
- Fig. 5: einen Schnitt längs der Linie V-V in Fig. 4; und
- Fig. 6: eine Schnittdarstellung des Nadelregisters in einem Zustand während der Durchführung von Reinigungsarbeiten.

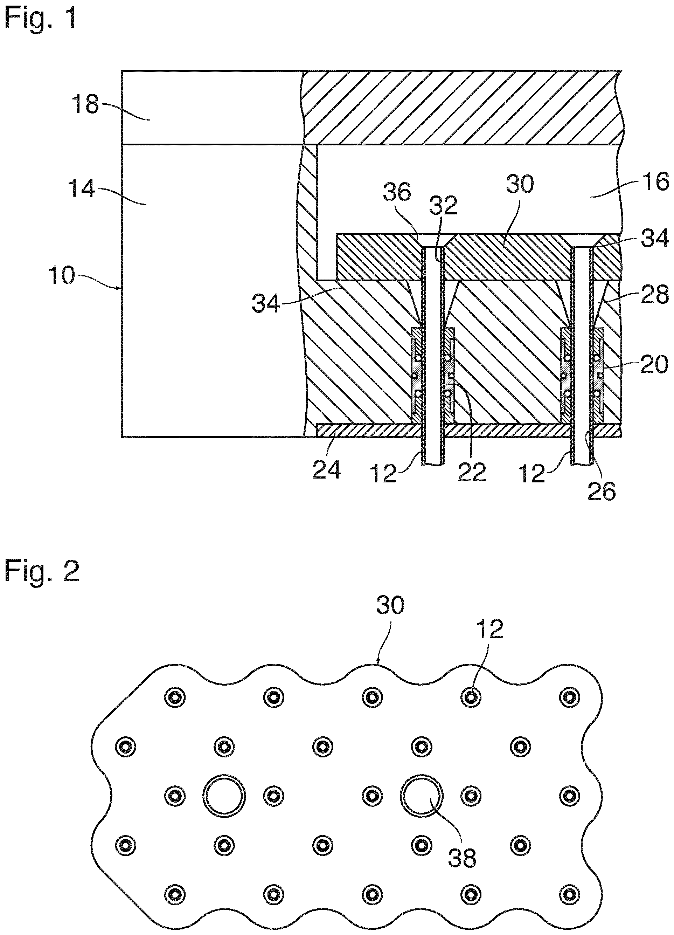

In Fig. 1 ist ein Teil eines Nadelregisters dargestellt, das beispielsweise in einem Pökelinjektor dazu dient, Pökellake in Fleischstücke zu injizieren. Das Nadelregister weist einen Nadelträger 10 auf, an dem mehrere hohle Nadeln 12 befestigt sind, die sich von dem Nadelträger 10 aus senkrecht nach unten erstrecken. In dem Pökelinjektor ist der Nadelträger 10 vertikalbeweglich über einem nicht gezeigten Förderer angeordnet, auf dem die Fleischstücke zugeführt werden. Wenn der Nadelträger abgesenkt wird, stechen die Nadeln 12 in das Fleisch ein, so dass die Pökellage injiziert werden kann.

Der Nadelträger 10 wird durch einen Block 14 aus einem lebensmittelverträglichen Kunststoff gebildet, in dem an der Oberseite eine verhältnismäßig flache, nach oben offene Verteilerkammer 16 ausgespart ist. Durch eine auf den Block 14 aufgespannte Deckplatte 18 kann die Verteilerkammer 16 druckdicht verschlossen werden. Ein Endabschnitt des Blockes 14, links in Fig. 1, nimmt eine nicht näher gezeigte Ventileinrichtung auf, mit der Pökellage unter Druck in die Verteilerkammer 16 zugeführt werden kann.

Die Nadeln 12 liegen mit ihren offenen oberen Enden in der Verteilerkammer 16, so dass sich die Pökellage gleichmäßig auf de Nadeln verteilt und über diese in das Fleisch injiziert werden kann. Der Teil des Blockes 14, der den Boden der Verteilerkammer 16 bildet, weist für jede der Nadeln 12 eine nach unten offene Dichtungskammer 20 auf, die eine elastische Dichtungspackung 22 für die Nadel aufnimmt. Am unteren Ende sind die Dichtungskammern 20 durch eine Abschlussplatte 24 abgeschlossen, die Bohrungen 26 für den Durchtritt der Nadeln 12 aufweist.

Nach oben schließt sich an jede Dichtungskammer 20 ein Kanal 28 an, der sich nach oben konisch zur Verteilerkammer 16 erweitert.

Auf dem Boden der Verteilerkammer 16 liegt eine Lochplatte 30 aus Metall auf, die für jede Nadel ein Durchgangsloch 32 aufweist.

Jede Nadel 12 sitzt im Passsitz in einem der Durchgangslöcher und ist fest in die Lochplatte 30 eingeschweißt, beispielsweise durch Laserschweißung längs einer ringförmigen Schweißnaht 34 am oberen Ende der Nadel und/oder wahlweise auch an der Unterseite der Lochplatte.

Im gezeigten Beispiel hat jedes Durchgangsloch 32 an der Oberseite der Lochplatte einen konisch erweiterten Teil 36, der einen störungsfreien Einstrom der Lake aus der Verteilerkammer 16 in die Nadel ermöglicht.

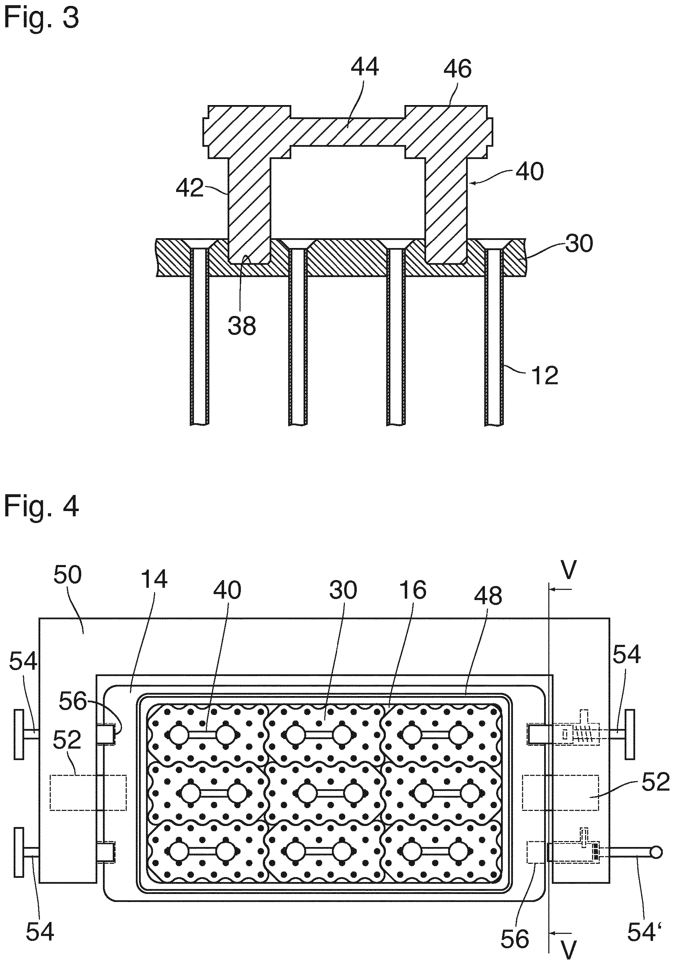

In Fig. 2 ist die Lochplatte 30 in der Draufsicht gezeigt, so dass man auf die oberen Enden der Nadeln 12 in den Durchgangslöchern blickt. Die Nadeln sind in einem regelmäßigen Raster angeordnet. Die Lochplatte 30 hat einen annähernd rechteckigen Grundriss, weist jedoch einen gewellten Rand auf, dessen Wellen an den Abstand von Nadel zu Nadel angepasst sind, so dass auch die randständigen Nadeln von ausreichend Material der Lochplatte umgeben sind. In der Mitte der Lochplatte 30 sind zwei größere Ausnehmungen 38 gezeigt, die zur Befestigung eines Griffes 40 dienen, wie in Fig. 3 dargestellt ist.

Der Griff 40 ist im gezeigten Beispiel ein Bügelgriff mit zwei vertikalen Pfosten 42, die mit ihren unteren Enden in den Ausnehmungen 38 befestigt, beispielsweise eingeschweißt sind und die am oberen Ende durch einen Bügel 44 verbunden sind. Die Pfosten 42 sind am oberen Ende verdickt und abgeflacht, so dass Stützflächen 46 gebildet werden, die bei aufgesetzter Deckplatte 18 an der Unterseite der Deckplatte anliegen können, so dass die Nadeln und die Lochplatte über den Bügelgriff 40 an der Deckplatte des Nadelregisters abgestützt werden, um die beim Einstechen der Nadeln in die Lebensmittelprodukte auftretenden Reaktionskräfte aufzunehmen.

Fig. 4 zeigt das Nadelregister bei abgenommener Deckplatte in einer Ansicht von oben. Man erkennt, dass die Verteilerkammer 16 die Grundrissform eines langgestreckten Rechtecks mit abgerundeten Ecken hat, in das mehrere Lochplatten 30 passend eingesetzt sind, so dass sie den gesamten Boden der Verteilerkammer bedecken.

Auf der Oberseite des Blockes 14 ist um den Rand der Verteilerkammer 16 herum eine Dichtung 48 vorgesehen, mit der bei aufgeklemmter Deckplatte 18 die Fuge zwischen dem Block 14 und der Deckplatte 18 abgedichtet wird.

Sowohl der Block 14 als auch die Deckplatte 18 sind in einem C-förmigen Rahmen 50 gehalten. Der Block 14 ist mit Achsstummeln 52 drehbar in den parallelen Schenkeln des Rahmens 50 gelagert. Diese Rahmenschenkel nehmen außerdem je zwei Paare von Arretierbolzen 54, 54' für den Block 14 und die Deckplatte 18 auf. Die Arretierbolzen 54, 54' sind elastisch in zugehörige Eingriffslöcher 56 des Blockes 14 bzw. der Deckplatte 18 vorgespannt, lassen sich jedoch von Hand zurückziehen und durch eine 90°-Drehung in der zurückgezogenen Position verriegeln, so dass der Block 14 und die Deckplatte 18 im Rahmen 50 verriegelt werden. Die Verriegelungen der Deckplatte und des Blockes 14 lassen sich jedoch unabhängig voneinander lösen.

In Fig. 4 sind drei der vier Arretierbolzen 54 für die Deckplatte in der Verriegelungsstellung gezeigt. Der vierte dieser Arretierbolzen ist weggelassen, und statt dessen ist rechts unten in Fig. 4 einer der vier Arretierbolzen 54' für den Block 14 in der Entriegelungsstellung gezeigt.

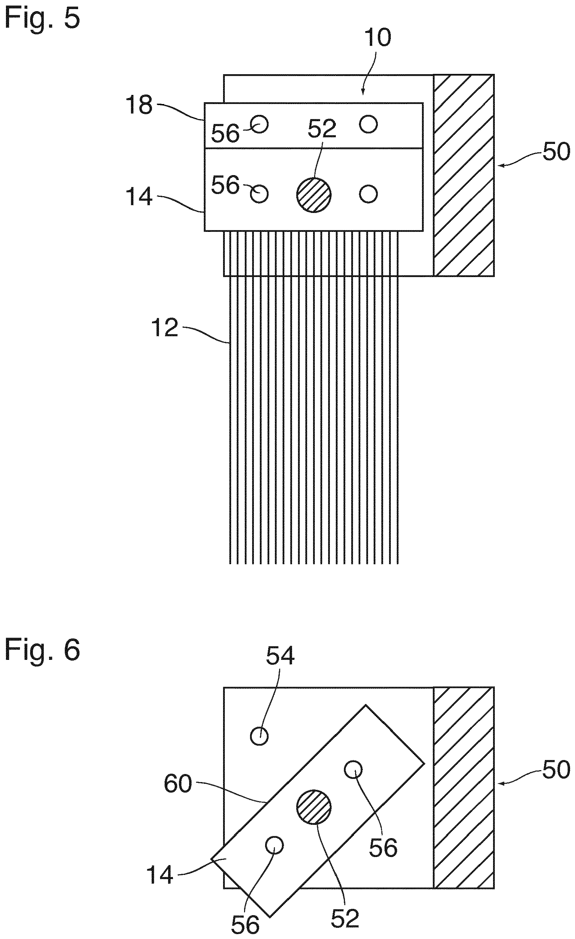

In Fig. 5 sind der Rahmen 50 und einer der Achsstummel 52 im Schnitt gezeigt und man blickt auf die Stirnseite des Blockes 14 und der Deckplatte 18 und die darin gebildeten Eingriffslöcher 56 für die Arretierbolzen.

Wenn das Nadelregister gereinigt werden soll, so werden die Arretierbolzen 54 für die Deckplatte 18 gelöst, und die Deckplatte wird abgenommen, so dass man Zugang zu der Verteilerkammer 16 im Inneren des Nadelregisters erhält. Mit Hilfe der Griffe 40 können dann die Lochplatten mit den darin gehaltenen Nadeln nacheinander nach oben herausgezogen werden. Die Lochplatten mit den Nadeln können dann in ein geeignet angepasstes Reinigungsgerät eingesetzt und gereinigt werden.

Fig. 6 zeigt das Nadelregister ohne die Deckplatte 18 und ohne die Nadeln 12. Der Block 14 ist in Fig. 6 um die durch die Achsstummel 52 definierte Achse um etwa 135° im Uhrzeigersinn gedreht worden, so dass nunmehr die Bodenseite 60, also die Seite des Blockes, an der die Nadeln 12 austreten, schräg nach oben weist. Das erlaubt es, den Block 14 auch an der Unterseite gründlich zu reinigen, ohne dass er aus dem Rahmen 50 entnommen werden muss. Die Reinigung der Verteilerkammer 16 erfolgt zweckmäßig in der unverdrehten Stellung des Blockes 14 gemäß Fig. 5.

## Patentansprüche

1. Nadelregister für Injektionsvorrichtungen zur Injektion von Flüssigkeit in Lebensmittelprodukte, mit einem Nadelträger (10), der eine Verteilerkammer (16) für die Flüssigkeit bildet, mehreren parallelen, hohlen Nadeln (12), die so an dem Nadelträger (10) gehalten sind, dass ihre offenen oberen Enden in der Verteilerkammer (16) liegen, und mit mindestens einer Lochplatte (30), die entnehmbar in der in der Verteilerkammer (16) aufgenommen ist und in deren Löchern mehrere der Nadeln (12) gehalten sind, **dadurch gekennzeichnet, dass** die Nadeln (12) in die Löcher der Lochplatte (30) fest eingesetzt sind.

2. Nadelregister nach Anspruch 1, bei dem die Nadeln (12) in die Löcher der Lochplatte (30) eingeschweißt sind.

3. Nadelregister nach Anspruch 1 oder 2, bei dem die Verteilerkammer (16) mehrere Lochplatten (30) mit zugehörigen Nadeln (12) aufnimmt.

4. Nadelregister nach einem der Ansprüche 1 bis 3, bei dem jede Lochplatte (30) an der Oberseite einen Griff (40) zur Entnahme der Lochplatte und der Nadeln aus der Verteilerkammer (16) aufweist.

5. Nadelregister nach Anspruch 4, bei dem die Verteilerkammer (16) durch eine Deckplatte (18) abgeschlossen ist und die Nadeln (12) und die Lochplatten (30) sich über die Griffe (40) an der Deckplatte (18) abstützen.

6. Nadelregister nach einem der vorstehenden Ansprüche, bei dem ein die Verteilerkammer (16) bildender Teil (14) des Nadelträgers (10) in einem Rahmen (50) gehalten und relativ zu diesem Rahmen um eine parallel zur Bodenfläche der Verteilerkammer (16) verlaufende Achse (52) um einen Winkel von mehr als 90° drehbar ist.
